# EUROPÄISCHE PATENTSCHRIFT

(11) **EP 3 687 757 B1**
(45) Veröffentlichungstag und Bekanntmachung des Hinweises auf die Patenterteilung: **19.04.2023**
(21) Anmeldenummer: 18720258.5
(22) Anmeldetag: 27.04.2018
(51) Int. Cl.: B29C 44/34, B29C 44/44, B29C 44/58

(54) **WERKZEUG ZUR VERARBEITUNG SCHÄUMBARER UND/ODER VORGESCHÄUMTER KUNSTSTOFFPARTIKEL**
TOOL FOR PROCESSING FOAMABLE AND/OR PRE-FOAMED PLASTIC PARTICLES
MOULE DE TRAITEMENT DE PARTICULES DE MATIÈRE PLASTIQUE EXPANSIBLES ET/OU PRÉ-EXPANSÉES

(30) Priorität: 29.09.2017 DE 102017122769
(43) Veröffentlichungstag der Anmeldung: 05.08.2020
(73) Patentinhaber: Siegfried Hofmann GmbH, 96215 Lichtenfels (DE)
(72) Erfinder: SCHÜTZ, Johannes, 96052 Bamberg (DE); BECK, Jonas, 96050 Bamberg (DE); SCHMIEDECK, Marcus, 09557 Flöha OT Falkenau (DE)
(74) Vertreter: Hafner & Kohl PartmbB
(86) Internationale Anmeldenummer: PCT/EP2018/060927
(87) Internationale Veröffentlichungsnummer: WO 2019/063140

(56) Entgegenhaltungen:
- EP-A1- 0 303 270
- EP-A2- 1 990 170
- DE-A1- 4 334 133
- JP-A- H06 320 634
- JP-A- S59 202 828

## Beschreibung

Die Erfindung betrifft ein Werkzeug, insbesondere ein Schäumwerkzeug zur Verarbeitung schäumbarer Kunststoffpartikel, mit wenigstens einem wenigstens einen Abschnitt einer Kavität ausbildenden Bereich, der wenigstens eine Öffnung aufweist, durch die wenigstens ein Fluid, insbesondere zum Schäumen der Kunststoffpartikel, in die Kavität und/oder aus der Kavität heraus leitbar ist.

Derartige Werkzeuge, insbesondere Schäumwerkzeuge, sind aus dem Stand der Technik hinlänglich bekannt. Schäumwerkzeuge werden beispielsweise zur Herstellung bzw. zur Formgebung von Formteilen aus schäumbaren Kunststoffpartikeln verwendet, beispielsweise werden Schäumwerkzeuge daher in Formteilautomaten verwendet. Derartige Formteilautomaten weisen wenigstens ein Schäumwerkzeug auf, sodass diese beispielsweise zwei plattenförmige Werkzeuge oder Werkzeugteile umfassen, die hubartig aufeinander zu- bzw. voneinander wegbewegbar sind. Zwischen derartigen Schäumwerkzeugen bildet sich somit eine Kavität aus, die einen Formhohlraum vorgibt, in dem die schäumbaren Kunststoffpartikel geformt werden können. Als Schäumwerkzeug wird im Rahmen dieser Anmeldung auch ein Bestandteil eines Werkzeugs verstanden, der einen Abschnitt einer Kavität ausbildet. Somit wird auch jede Werkzeughälfte eines derartigen Formteilautomaten als Werkzeug im Sinne der Anmeldung verstanden.

Zur Herstellung werden die schäumbaren und/oder vorgeschäumte Kunststoffpartikel in die Kavität eingebracht und beispielsweise mittels heißen Dampfs durch einen so genannten Sintervorgang unter Ausbildung eines geschäumten Formteils miteinander verbunden, kurz miteinander versintert. Es können somit auch Kunststoffpartikel Anwendung finden, die kein aktives Treibmittel aufweisen. Dabei legt die Oberfläche bzw. die Oberflächenstruktur der Kavität die Oberflächenstruktur des entsprechend ausgebildeten Formteils fest. Hierbei ist es möglich, die Oberfläche der Kavität entsprechend den Anforderungen an die Oberfläche des damit hergestellten Formteils zu wählen, sodass das Formteil nach dem Entformen die entsprechende durch das Schäumwerkzeug geformte Oberfläche aufweist.

Es ist bekannt, runde bzw. schlitzartige Öffnungen zu verwenden, um das Fluid für das Schäumen der Kunststoffpartikel in die Kavität einzubringen. Bei der Konstruktion bzw. bei der Festlegung der Parameter der Öffnung ist zu berücksichtigen, dass die geometrisch-konstruktive Form der Öffnung sowie deren Größe Einfluss auf das Herstellungsverfahren bzw. die (Oberflächen-) Beschaffenheit des geschäumten Formteils haben. Insbesondere ist die Größe der Öffnungen wichtig für den Volumenstrom des Fluids durch die Öffnung. Die Größe bzw. die Geometrie der Öffnungen hat ferner Einfluss darauf, inwieweit sich ein im Bereich der Öffnung angeordneter Teil des herzustellenden Formteil in die Öffnung eindrücken kann; es besteht demnach ebenfalls ein Einfluss auf das Entformverhalten.

Aus dem Dokument EP 0 303 270 A1 ist ein Werkzeug gemäß dem Oberbegriff des Anspruchs 1, ein Verfahren gemäß dem Oberbegriff des Anspruchs 13 und ein Verfahren zur Herstellung eines geschäumten Formteils bekannt. Das Werkzeug kann über eine Zuführung Dampf sowie Partikel in eine Kavität bereitstellen. In der Kavität befinden sich mehrere Öffnungen, durch die ein Fluid entweichen kann. Daneben ist aus der Druckschrift JP H06 320 634 A ein Einlegeteil gemäß dem Oberbegriff des Anspruchs 12 bekannt. Die genannte Druckschrift offenbart ein Werkzeug, bei dem eine

Kavität durch einen porösen Körper begrenzt wird. Der Körper stellt Öffnungen bereit bzw. ist mit Öffnungen verbunden, die unterschiedliche Formen aufweisen können.

Der Erfindung liegt daher die Aufgabe zugrunde, ein verbessertes Werkzeug zur Verarbeitung schäumbarer und/oder vorgeschäumter Kunststoffpartikel anzugeben.

Die Aufgabe wird durch ein Werkzeug gemäß Anspruch 1 gelöst. Vorteilhafte Weiterbildungen des Werkzeugs sind Gegenstand der auf Anspruch 1 rückbezogenen Unteransprüche.

Die Erfindung beruht auf der Erkenntnis, dass das Werkzeug, welches zur Verarbeitung von schäumbaren bzw. vorgeschäumten Kunststoffpartikeln vorgesehen ist, d. h. bei welchem es sich typischerweise um ein Schäumwerkzeug handelt, wenigstens eine Öffnung aufweist, deren Querschnittsform dreieckig ist. Das Werkzeug weist sonach wenigstens eine dreieckige Öffnung, insbesondere mehrere dreieckige Öffnungen, auf, durch die das zum Schäumen der Kunststoffpartikel verwendete Fluid - hierbei handelt es sich typischerweise um Dampf, insbesondere heißen Wasserdampf - durch das Werkzeug in die Kavität einströmen kann. Demnach kann Dampf mittels einer Dampferzeugungseinrichtung erzeugt werden und über geeignete Fluidführungseinrichtungen, beispielsweise wenigstens einen Fluidkanal, zu der dreieckigen Öffnung geleitet werden. Der Dampf kann aus der dreieckigen Öffnung in die Kavität einströmen und zum Schäumen der Kunststoffpartikel verwendet werden. Als Querschnittsform der Öffnung wird die Form der Öffnung in Strömungsrichtung des Fluids bzw. dazu entgegengesetzt verstanden. Die dreieckige Form liegt somit in einer oder parallel zu einer Ebene, die parallel zu dem jeweiligen Oberflächenabschnitt des Werkzeugs angeordnet ist, in dem die Öffnung angeordnet ist. Zur Herstellung eines Formteils können grundsätzlich alle geeigneten Kunststoffpartikel verwendet werden, insbesondere können derartige Formteile aus expandiertem Polypropylen (EPP) hergestellt werden.

Die dreieckige Querschnittsform einer jeweiligen Öffnung bietet dabei zunächst den Vorteil, dass diese datenverarbeitungsmäßig leicht darstellbar und verarbeitbar ist. Mit anderen Worten kann eine dreieckige Querschnittsform mit gängigen Datenverarbeitungsprogrammen besonders effizient dargestellt und verarbeitet werden. Die dreieckige Querschnittsform bzw. die dreieckige Querschnittsfläche lässt sich dabei durch drei Punkte darstellen, die die Eckpunkte des Dreiecks bzw. der dreieckigen Querschnittsform definieren. Somit wird ein Vorteil hinsichtlich der zu verarbeitenden Datenmenge gegenüber herkömmlich verwendeten Öffnungen erreicht, da jedwede weitere Querschnittsform, beispielsweise viereckig, vieleckig oder rund, durch eine Vielzahl von Punkten definiert werden muss, die zu einem erhöhten Datenaufkommen führen. Des Weiteren ist die dreieckige Querschnittsform dahingehend vorteilhaft, da diverse Datenverarbeitungsprogramme, insbesondere solche zur Verarbeitung von STL-Daten, jede Fläche durch Dreiecksflächen annähert, sodass die dreieckige Querschnittsform der Öffnung in dieser Form der Datenverarbeitung die Grundform darstellt. Jede andere geometrische Form wird sonach durch diese Grundform angenähert, was zu einer erhöhten Datenmenge und somit einer Reduzierung der Effizienz führt.

Zusätzlich bietet die dreieckige Querschnittsform den Vorteil, dass gegenüber einer andersartigen Querschnittsform, beispielsweise einer runden Querschnittsform, ein im Vergleich höherer Volumenstrom des in die Kavität strömenden Fluids bei gleicher Stützwirkung der zu schäumenden Kunststoffpartikel bzw. bei gleichem Volumenstrom eine verbesserte Stützwirkung der zu schäumenden Kunststoffpartikel (des entsprechenden Abschnitts des mit dem Werkzeug herstellbaren bzw. herzustellenden Formteils) erreicht wird. Die Abstützwirkung kann dabei beispielhaft an einer Länge definiert bzw. beurteilt werden, auf welcher die Kunststoffpartikel nicht von dem Werkzeug, insbesondere einer formgebenden Oberfläche, getragen werden, da diese im Bereich der Öffnung nicht gestützt sind. Mit anderen Worten kann sich das zu schäumende Kunststoffmaterial in die Öffnung eindrücken, wobei das Maß, um das sich das Kunststoffmaterial in die Öffnung eindrückt, von der Größe der Öffnung bzw. insbesondere von der Länge abhängt, über welche das Kunststoffmaterial nicht unterstützt ist. Je größer die Querschnittsform bzw. je größer die zugehörige Länge, über welche das Kunststoffmaterial nicht unterstützt wird, umso stärker wird sich dieses in die Öffnung eindrücken. Dadurch verstärkt sich die Abzeichnung des Werkzeugs auf dem herzustellenden bzw. hergestellten Formteil, was zumeist ungewünscht ist.

Somit kann als einfachstes Beispiel eine kreisrunde Querschnittsform angenommen werden. Bei einer solchen (kreis-) runden Querschnittsform ist der Radius bzw. der Durchmesser des Kreises als die Länge anzusehen, über der das Kunststoffmaterial oberhalb der Öffnung nicht unterstützt wird und sich somit in die Öffnung eindrücken kann. Eine vergleichbare dreieckige Querschnittsform mit einer entsprechenden Länge, über welche das Kunststoffmaterial nicht unterstützt wird, besitzt die entsprechende Kreisfläche der kreisrunden Querschnittsform als Inkreis und besitzt somit gegenüber dem kreisrunden Querschnitt eine erhöhte Querschnittsfläche. Somit ist bei gleichen Abstützeigenschaften ein erhöhter Volumenstrom durch die dreieckige Öffnung möglich bzw. werden bei gleichem Volumenstrom (gleicher Querschnitsfläche) verbesserte Abstützeigenschaften erzielt.

Ein weiterer Vorteil der dreieckigen Querschnittsform besteht in deren Herstellbarkeit, da in Bezug auf additive Herstellungsverfahren ein gewisser Winkel der Öffnungsform eingehalten werden muss, um stabile Prozessbedingungen bzw. stabile Ergebnisse des additiven Herstellungsverfahrens sicherstellen zu können. Insbesondere, falls die Baurichtung in einem additiven Prozess nicht parallel mit der zukünftigen Strömungsrichtung des Fluids liegt, sondern beispielsweise senkrecht dazu ausgerichtet ist, wird dieser Winkel bei gängigen Querschnittsformen nicht eingehalten. Somit hat sich gezeigt, dass insbesondere in einem Bereich unterhalb von 30° gegenüber der Waagrechten (bei vertikal schichtweise aufbauenden additiven Herstellungsverfahren) negative Auswirkungen auf das Herstellungsergebnis auftreten können. Bei einer beispielsweise kreisrunden Querschnittsform, die im Wesentlichen vertikal hergestellt wird (Fluidströmungsrichtung senkrecht zur Baurichtung), wird dieser Winkel zwangsläufig unterschritten, sodass im Bereich des oberen Kreisbogens negative Auswirkungen auf das Herstellungsergebnis auftreten können.

Bei der dreieckigen Querschnittsform kann dabei jeder der Innenwinkel derart gewählt werden bzw. die Orientierung des Dreiecks kann so gewählt werden, dass im Wesentlichen waagrechte Flächen nicht auftreten bzw. nicht überhängend gebaut werden müssen (beispielsweise Dreieckspitze in Baurichtung nach oben ausgerichtet). Somit bietet die dreieckige Querschnittsform der Öffnung Vorteile hinsichtlich der Herstellbarkeit, des zu erzielenden Volumenstroms sowie der Abstützfähigkeit des Werkzeugs.

Gemäß einer möglichen Weiterbildung des Werkzeugs kann vorgesehen sein, dass wenigstens ein Innenwinkel der dreieckigen Querschnittsform einen Wert in einem Bereich zwischen 30° bis 80°, bevorzugt größer als 45°, aufweist, wobei die Summe der Innenwinkel der dreieckigen Querschnittsform 180° beträgt. Demnach ist wenigstens ein Innenwinkel vorgesehen, der größer als 30° ist, bevorzugt ist wenigstens ein Winkel größer als 45°, besonders bevorzugt sind mit der allgemein gültigen Maßgabe, dass die Summe der Innenwinkel der dreieckigen Querschnittsform 180° beträgt, alle Innenwinkel größer als 45°. Dadurch, dass wenigstens ein Innenwinkel größer als 30° ist, insbesondere kein Innenwinkel kleiner als 30° ist, kann die Öffnung derart orientiert werden, dass bei der Herstellung des Werkzeugs keine waagrechte Seite bzw. Seitenfläche überhängend gebaut werden muss. Beispielsweise kann eine der Ecken des Dreiecks in Baurichtung weisen. Selbstverständlich ist die Öffnung mit der dreieckigen Querschnittsform letztlich dreidimensional, bildet also ein Dreiecksprisma oder einen Pyramidenstumpf aus. Die Ausführungen in Bezug auf die dreieckige Querschnittsform sind somit selbstverständlich auf die dreidimensionale Form der Öffnung, die letztlich hergestellt wird, übertragbar.

Gemäß einer bevorzugten Ausgestaltung des Werkzeugs kann vorgesehen sein, dass die dreieckige Querschnittsform gleichseitig ist. Gemäß dieser Ausgestaltung ist vorgesehen, dass die dreieckige Querschnittsform gleichseitig ist, also alle Seiten des Dreiecks gleich lang sind, wobei jeweils zwei benachbarte Seiten einen Innenwinkel von 60° einschließen. Durch diese gleichseitige dreieckige Querschnittsform wird die Isotropie der Öffnung bzw. der Vielzahl von Öffnungen, die typischerweise über das Werkzeug verteilt angeordnet sind, verbessert. Somit kann bei einer, beispielweise gleichmäßigen, Verteilung der Öffnungen über das Werkzeug erreicht werden, dass die Öffnungen nicht mit einer waagrechten Seite hängend gebaut werden müssen. Ferner kann, beispielsweise bei gekrümmten Werkzeugflächen, bei denen sich über die, insbesondere formgebende, Fläche betrachtet, die Orientierung der Öffnungen ändert, eine gewisse Widerstandsfähigkeit bzw. Unabhängigkeit gegenüber Veränderungen der Orientierung der Öffnung in Bezug auf die Baurichtung erreicht werden. Diese Unabhängigkeit der Orientierung ist darauf zurückzuführen, dass alle Innenwinkel gleich groß sind und somit die dreieckige Querschnittsform weitgehend isotrop ist, also keine Vorzugsrichtung aufweist.

Das Werkzeug kann ferner dahingehend weitergebildet werden, dass die Querschnittsfläche und/oder die Querschnittsform einer jeweiligen dreieckigen Öffnung entlang einer, insbesondere im Wesentlichen parallel zu einer Strömungsrichtung des Fluids verlaufenden, Mittelachse veränderlich ist. Als Mittelachse kann dabei eine Achse angesehen werden, die im Wesentlichen senkrecht auf der Querschnittsfläche der Öffnung steht, also im Wesentlichen parallel zu einer der Kanten der dreidimensionalen Form der Öffnung verläuft. Beispielsweise kann als Mittelachse eine Achse definiert werden, die senkrecht durch den Schnittpunkt der Winkelhalbierenden der dreieckigen Querschnittsform der Öffnung verläuft oder die durch wenigstens zwei derartige Schnittpunkte zweier an verschiedenen Positionen vorgenommener Querschnitte derselben Öffnung verläuft.

Im Wesentlichen strömt das Fluid ebenfalls entlang dieser Achse von wenigstens einem Strömungseinlass des Werkzeugs durch die Öffnung in die Kavität. Nach der beschriebenen Ausgestaltung des Werkzeugs können die Querschnittsfläche und/oder die Querschnittsform der dreieckigen Öffnung entlang der Mittelachse veränderlich sein, sodass die Querschnittsfläche entlang der Mittelachse zunimmt bzw. abnimmt.

Die Querschnittsfläche einer Öffnung kann somit veränderlich sein, d. h. insbesondere kontinuierlich, zunehmen oder abnehmen, wobei die Öffnung bevorzugt im Wesentlichen pyramidal, also als Pyramidenstumpf, ausgebildet ist. Demnach kann sich die dreieckige Öffnung in Strömungsrichtung, also von dem wenigstens einen Strömungseinlass zu der Kavität hin, erweitern bzw. verjüngen. Demnach kann die Basisfläche des Pyramidenstumpfs der Kavität oder dem Strömungseinlass zugewandt sein. Die pyramidale Ausbildung der Öffnung weist entsprechend z. B. eine dreieckige Basisfläche und eine dreieckige Deckfläche auf.

Bei der Verringerung des Querschnitts bzw. der Querschnittsfläche entlang der Strömungsrichtung bzw. der Mittelachse kann eine Verringerung des Drucks bzw. ein Druckabfall an der Öffnung vermieden werden, da die Öffnung in Strömungsrichtung, beispielsweise kontinuierlich, kleiner wird. Ebenso ist es möglich, die Querschnittsfläche in Richtung der Kavität, beispielsweise kontinuierlich, zu vergrößern, sodass sich beispielsweise Vorteile im Hinblick auf ein Entformen des hergestellten Formteils ergeben.

Ferner kann das Werkzeug mit wenigstens einer Strömungserzeugungseinrichtung derart koppelbar sein, dass ein Überdruck und/oder ein Unterdruck an der wenigstens einen Öffnung erzeugbar ist. Wie zuvor beschrieben, ist es möglich, ein Fluid zu erzeugen, beispielsweise kann heißer (Wasser-) Dampf mittels einer Dampferzeugungseinrichtung erzeugt und über die wenigstens eine dreieckige Öffnung in die Kavität geleitet werden. Dabei ist es mit der Strömungserzeugungseinrichtung möglich, einen Überdruck zu erzeugen, sodass das Fluid druckbeaufschlagt durch das Werkzeug in die Kavität gefördert wird, d. h. unter Druck aus der wenigstens einen dreieckigen Öffnung in die Kavität einströmt.

Ebenso ist es möglich, mittels der oder einer weiteren Strömungserzeugungseinrichtung einen Unterdruck an der wenigstens einen dreieckigen Öffnung zu erzeugen. Der Unterdruck kann beispielsweise dazu verwendet werden, ein, z. B. folienartiges bzw. -förmiges, Einlegeteil in der Kavität zu halten. Der an der wenigstens einen dreieckigen Öffnung erzeugte Unterdruck kann ferner das Abkühlen eines hergestellten Formteils unterstützen, indem restliches in der Kavität vorhandenes Wasser durch den Unterdruck vermehrt verdampft wird.

Grundsätzlich können dreieckige Öffnungen gleich oder unterschiedlich groß ausgebildet sein, d. h. sich in ihrer Größe, allgemein in ihren geometrischen Abmessungen, gleichen oder unterscheiden. Bei dem beschriebenen Werkzeug ist vorgesehen, dass wenigstens zwei der dreieckigen Öffnungen unterschiedlich groß ausgebildet sind. Sonach können beispielsweise in Bezug auf vordefinierte Bereiche des herzustellenden Formteils verschieden große Öffnungen vorgesehen sein, um verschiedene Volumenströme des Fluids in die Kavität zu ermöglichen. Ferner kann in Abhängigkeit der Orientierung der Öffnung, insbesondere in Bezug auf einen Untergrund, die Größe der vorgesehenen dreieckigen Öffnungen angepasst bzw. eingestellt werden, sodass ein Eindrücken des Formteils in die Öffnung vermieden bzw. reduziert werden kann. Dadurch kann die Abzeichnung des Werkzeugs, insbesondere der dreieckigen Öffnungen des Werkzeugs auf dem hergestellten Formteil reduziert bzw. vermieden werden.

Das Werkzeug sieht alternativ oder zusätzlich vor, dass wenigstens zwei der dreieckigen Öffnungen unterschiedlich orientiert sind. Demnach weisen wenigstens zwei der an dem Werkzeug vorgesehenen Öffnungen eine unterschiedliche Orientierung relativ zueinander auf, d. h. dassbestimmte Ecken bzw. Spitzen in unterschiedliche Richtungen weisen. Bei einer gleichseitigen Ausführung der dreieckigen Öffnung kann insbesondere vorgesehen sein, dass die Ecken der dreieckigen Öffnungen nicht in dieselben Richtungen weisen. Dadurch kann erreicht werden, dass, beispielweise in Abhängigkeit der Geometrie des Formteils bzw. des Werkzeugs, eine unterschiedliche Orientierung der dreieckigen Öffnungen dazu führt, dass das Werkzeug verbessert hergestellt werden kann. Insbesondere kann dadurch verhindert werden, dass im Wesentlichen waagrechte Bereiche (über-) hängend hergestellt werden müssen, sodass die Qualität des hergestellten Werkzeugs verbessert werden kann.

Das Werkzeug kann ferner derart ausgebildet sein, dass wenigstens zwei, insbesondere vier, dreieckige Öffnungen eine Einheitszelle bilden, wobei die wenigstens zwei dreieckigen Öffnungen unterschiedlich ausgerichtet/orientiert sind. Demnach kann eine Einheitszelle definiert werden, die wenigstens zwei unterschiedlich orientierte dreieckige Öffnungen aufweist. Besonders bevorzugt ist hierbei vorgesehen, dass die Einheitszelle vier dreieckige Öffnungen aufweist, wobei die vier dreieckigen Öffnungen unterschiedlich ausgerichtet/orientiert sind. Einzelne Einheitszellen können in der Konzipierung des Werkzeugs anschließend definiert über das Werkzeug verteilt bzw. auf diesem angeordnet werden, wodurch stets dieselbe Einheitszelle bzw. dieselben vier dreieckigen Öffnungen mit der in der Einheitszelle definierten Orientierung auf dem Werkzeug angeordnet werden. Die Einheitszellen können insbesondere nahtlos aneinander anschließend über das Werkzeug verteilt werden, um die Anordnung der einzelnen Öffnungen auf dem Werkzeug festzulegen. Mit anderen Worten umfasst das Werkzeug schließlich eine Vielzahl von dreieckigen Öffnungen, wobei die einer Einheitszelle zugewiesenen Öffnungen unterschiedliche Orientierungen aufweisen.

Dies bietet den Vorteil, dass unabhängig von der Geometrie des Werkzeugs bzw. des die Kavität begrenzenden Bereichs stets wenigstens eine Öffnung vorgesehen ist, die eine bevorzugte Orientierung aufweist. Eine bevorzugte Orientierung ist dabei beispielsweise eine Orientierung, in der die dreieckige Öffnung bei der Herstellung mit einer bestimmten Ecke nach oben zeigt (bzw. nicht nach unten zeigt), sodass definierte Herstellungsparameter beim Herstellen des Werkzeugs eingehalten werden können. Sonach ist es möglich, unabhängig von der Formgebung des Werkzeugs bzw. des wenigstens einen Bereichs, stets eine Verteilung der Orientierungen der dreieckigen Öffnungen zu erreichen, sodass beispielsweise eine der dreieckigen Öffnungen eine optimale Orientierung, eine dreieckige Öffnung eine weniger optimale Orientierung und eine dreieckige Öffnung mit einer dazwischenliegenden Orientierung aufweist. Somit kann sichergestellt werden, dass wenigstens eine der dreieckigen Öffnungen einer Einheitszelle eine optimale Orientierung aufweist bzw. im Wesentlichen nahe an der optimalen Orientierung angeordnet ist, sodass jede Einheitszelle wenigstens eine dreieckige Öffnung aufweist, die definierte Strömungseigenschaften des in die Kavität strömenden Fluids in dem der Einheitszelle zugeordneten Bereich der Kavität gewährleistet.

Besonders bevorzugt kann dabei vorgesehen sein, dass die Einheitszelle vier dreieckige Öffnungen aufweist, wobei die dreieckigen Öffnungen jeweils um 90° gegeneinander gedreht sind. Sonach kann jede der Einheitszellen vier dreieckige Öffnungen aufweisen, die gegeneinander verdreht sind. Durch die Drehung der einzelnen dreieckigen Öffnungen um jeweils 90° gegeneinander ist eine dreieckige Öffnung pro (Haupt-) Richtung in der entsprechenden Fläche vorgesehen. Mit anderen Worten kann beispielsweise eine dreieckige Öffnung mit einer entsprechenden Ecke nach oben, eine Öffnung mit der Ecke nach unten, eine Öffnung mit der Ecke nach rechts und eine Öffnung mit der Ecke nach links angeordnet sein. Demnach wird insbesondere sichergestellt, dass unabhängig von der Geometrie des Werkzeugs bzw. des den wenigstens einen Abschnitt der Kavität ausbildenden Bereichs, derart orientiert ist, dass bei der Herstellung des Werkzeugs definierte Herstellungsparameter eingehalten werden können, sodass das in die Kavität einströmende Fluid definierte Strömungseigenschaften aufweist.

Das zuvor beschriebene Werkzeug ist insgesamt bzw. ist der wenigstens eine Bereich mittels eines additiven Herstellungsverfahrens hergestellt. Insbesondere kann als additiver Herstellungsprozess Laserstrahlschmelzen und/oder Binder Jetting und/oder Elektronenstrahlschmelzen und/oder Fused Deposition Modeling und/oder Laser Metal Deposition verwendet werden. In einem derartigen Prozess wird das Werkzeug bzw. der wenigstens eine Bereich sukzessive schichtweise aufgebaut. Beispielsweise wird dabei eine Schicht aus mittels eines Energiestrahls verfestigbaren Baumaterial aufgetragen und anschließend mit einem Energiestrahl, beispielsweise einem Laserstrahl, belichtet und somit verfestigt. Anschließend kann eine weitere Schicht frisches Baumaterial aufgetragen werden, sodass sich ein schichtweiser Aufbau des Werkzeugs bzw. des wenigstens einen Bereichs ergibt.

Daneben kann vorgesehen sein, dass der den wenigstens einen Abschnitt der Kavität ausbildende Bereich, der wenigstens eine dreieckige Öffnung aufweist, als Einlegebauteil ausgebildet ist, das in eine korrespondierende Aufnahme des Werkzeugs einlegbar ist. Somit kann der entsprechende Bereich als Einlegebauteil ausgebildet sein, wobei das Werkzeug eine korrespondierende Aufnahme aufweist, in die das Einlegebauteil einlegbar ist. Entsprechend dem Herstellungsprozess für das mittels des Werkzeugs herstellbare oder hergestellte Formteil können sonach verschiedene Einlegebauteile ausgewählt und eingelegt werden. Verschiedene Einlegebauteile können sich dabei in der Anzahl und/oder der Größe und/oder der Anordnung bzw. Ausrichtung/Orientierung der einzelnen dreieckigen Öffnungen unterscheiden.

Bevorzugt ist der wenigstens eine Bereich mittels CAD-Daten (computer aided design) oder mittels wenigstens eines Maschinenparameters erzeugbar. Wie zuvor beschrieben, bilden dabei die dreieckigen Öffnungen eine Grundform, die eine möglichst geringe Datenmenge benötigt. Beispielweise im STL-Format werden sämtliche Flächen durch dreieckige Grundflächen angenähert, sodass sich eine entsprechende runde Fläche aus einer Vielzahl dreieckiger Grundflächen zusammensetzt. Durch die Auswahl einer dreieckigen Öffnung kann die entsprechende dreieckige Querschnittsform bzw. die zugehörige dreieckspyramidale bzw. dreiecksprismatische Form direkt abgebildet werden und somit eine möglichst geringe Datenmenge benötigen.

Daneben betrifft die Erfindung ein Einlegebauteil für ein Werkzeug, insbesondere ein zuvor beschriebenes erfindungsgemäßes Werkzeug, insbesondere ein Schäumwerkzeug. Das Einlegebauteil weist wenigstens einen wenigstens einen Abschnitt einer Kavität ausbildenden Bereich auf oder bildet einen solchen aus, der wenigstens eine Öffnung aufweist, durch die wenigstens ein Fluid, insbesondere zum Schäumen der Kunststoffpartikel, in die Kavität und/oder aus der Kavität heraus leitbar ist, wobei die Öffnung eine dreieckige Querschnittsform aufweist, wobei wenigstens zwei dreieckige Öffnungen unterschiedlich groß ausgebildet sind und/oder wenigstens zwei dreieckige Öffnungen unterschiedlich orientiert sind.

Ferner betrifft die Erfindung ein Verfahren zur Herstellung eines Werkzeugs, insbesondere eines erfindungsgemäßen Werkzeugs (Schäumwerkzeugs) bzw. eines erfindungsgemäßen Einlegebauteils, mit wenigstens einem wenigstens einen Abschnitt einer Kavität ausbildenden Bereich, der wenigstens eine Öffnung aufweist, durch die wenigstens ein Fluid in die Kavität oder aus der Kavität heraus leitbar ist, wobei die wenigstens eine Öffnung mit einer dreieckigen Querschnittsform hergestellt wird, wobei wenigstens zwei dreieckige Öffnungen unterschiedlich groß ausgebildet sind und/oder wenigstens zwei dreieckige Öffnungen unterschiedlich orientiert sind, wobei das Werkzeug mittels eines additiven Herstellungsverfahrens hergestellt wird.

Selbstverständlich sind sämtliche Vorteile, Einzelheiten und Merkmale, die in Bezug auf das erfindungsgemäße Werkzeug beschrieben wurden, auf das erfindungsgemäße Einlegebauteil bzw. das erfindungsgemäße Herstellungsverfahren für ein entsprechendes Werkzeug bzw. ein entsprechendes Einlegebauteil übertragbar. Die entsprechenden Merkmale bzw. Einzelheiten sind beliebig untereinander austauschbar bzw. aufeinander übertragbar.

Wie zuvor beschrieben, wird das Werkzeug bzw. das Einlegebauteil besonders bevorzugt derart hergestellt, dass wenigstens zwei, insbesondere vier, dreieckige Öffnungen eine Einheitszelle bilden, wobei die wenigstens zwei dreieckigen Öffnungen unterschiedlich ausgerichtet/orientiert sind.

Die entsprechende Einheitszelle wird definiert über das herzustellende Werkzeug verteilt. Dies geschieht bevorzugt in einem, insbesondere zumindest teilweise automatisierten, Positionieren der einzelnen Einheitszellen über das herzustellende Werkzeug. Mit anderen Worten wird eine Einheitszelle definiert, die eine fixe Anzahl an dreieckigen Öffnungen aufweist, wobei die Einheitszelle die Orientierung der ihr zugewiesenen Öffnungen festlegt. Beispielsweise ist eine Einheitszelle aus vier unterschiedlich orientierten, insbesondere um 90° gegeneinander gedrehten, dreieckigen Öffnungen ausgebildet. Die Einheitszelle wird über das herzustellende Werkzeug gerastert bzw. verteilt. Beispielsweise wird das Werkzeug in wenigstens einem Bereich mit aneinander anschließenden oder definiert voneinander beabstandeten Einheitszellen überdeckt.

Besonders bevorzugt wird die Verteilung der einzelnen Einheitszellen derart durchgeführt, dass zunächst ein Einheitsvolumen definiert wird, welches größer ist, als das Volumen des herzustellenden Werkzeugs bzw. eines definierten Bereichs davon. Anschließend wird das Einheitsvolumen, insbesondere gleichmäßig, mit Einheitszellen ausgefüllt. Demnach werden die Einheitszellen, beispielsweise nahtlos, aneinandergereiht, sodass das Volumen bzw. die Oberfläche des die Kavität ausbildenden Bereichs, möglichst nahtlos mit Einheitszellen bedeckt wird. Anschließend wird die Schnittmenge zwischen dem Einheitsvolumen und dem Werkzeug gebildet, welche Schnittmenge die Position der einzelnen Einheitszellen festlegt.

Gemäß dem erfindungsgemäßen Verfahren ist vorgesehen, dass das Werkzeug mittels eines additiven Herstellungsverfahrens hergestellt wird, insbesondere mittels Laserstrahlschmelzens und/oder Binder Jettings und/oder Elektronenstrahlschmelzens und/oder Fused Deposition Modeling und/oder Laser Metal Deposition.

Daneben betrifft die Erfindung ein Verfahren zur Herstellung eines geschäumten Formteils mittels eines erfindungsgemäßen Werkzeugs bzw. mittels eines erfindungsgemäßen Einlegebauteils. Selbstverständlich sind sämtliche Ausführungen, insbesondere sämtliche Einzelheiten, Vorteile und Merkmale, die in Bezug auf das erfindungsgemäßes Werkzeug, das erfindungsgemäße Einlegebauteil und das erfindungsgemäße Herstellungsverfahren beschrieben wurden, vollständig auf das erfindungsgemäße Verfahren zur Herstellung eines geschäumten Formteils übertragbar und umgekehrt.

Die Erfindung wird nachfolgend anhand von Ausführungsbeispielen unter Bezugnahme auf die Zeichnungen näher erläutert. Die Zeichnungen sind schematische Darstellungen und zeigen:
- Fig. 1: einen Ausschnitt eines erfindungsgemäßen Werkzeugs in geschnittener Darstellung;
- Fig. 2: das Detail II des erfindungsgemäßen Werkzeugs von Fig. 1 in Draufsicht;
- Fig. 3: einen Ausschnitt eines einen Abschnitt einer Kavität ausbildenden Bereichs eines erfindungsgemäßen Werkzeugs in seitlicher Ansicht; und
- Fig. 4: einen Ausschnitt eines einen Abschnitt einer Kavität ausbildenden Bereichs eines erfindungsgemäßen Werkzeugs in Draufsicht.

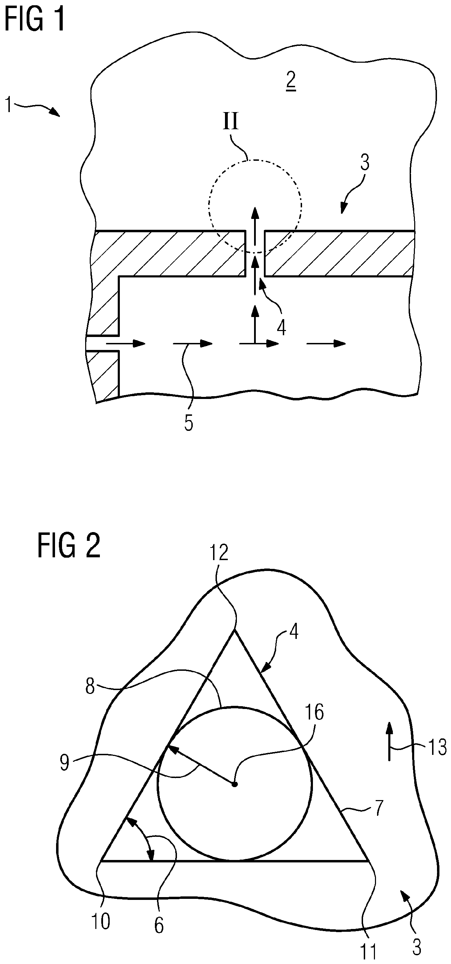

Fig. 1 zeigt einen Ausschnitt eines Werkzeugs 1, das als Schäumwerkzeug zur Verarbeitung schäumbarer bzw. vorgeschäumter Kunststoffpartikel ausgebildet ist. Das Werkzeug 1 weist einen einen Abschnitt einer Kavität 2 ausbildenden Bereich 3 auf. Der Bereich 3 weist mehrere dreieckige Öffnungen 4 auf, wobei der Übersichtlichkeit halber nur eine Öffnung 4 dargestellt ist. Durch die dreieckige Öffnung 4 kann ein Fluid, beispielsweise heißer Wasserdampf, in die Kavität 2 eingeleitet und aus der Kavität 2 herausgeleitet werden (dargestellt durch Pfeile 5).

Zum Erzeugen eines Überdrucks bzw. eines Unterdrucks des Fluids an der dreieckigen Öffnung 4 ist das Werkzeug 1 mit einer Strömungserzeugungseinrichtung (nicht dargestellt) gekoppelt. Ferner ist das Werkzeug 1 bzw. die Strömungserzeugungseinrichtung mit einer Dampferzeugungseinrichtung gekoppelt, die das Fluid, insbesondere den heißen Wasserdampf, erzeugt.

Die dreieckige Öffnung 4, insbesondere deren Vorteile gegenüber bekannten Querschnittsformen wird nachfolgend anhand von Fig. 2 näher erläutert. Fig. 2 zeigt das Detail II des Werkzeugs 1 von Fig. 1 in einer Aufsicht. Die dreieckige Öffnung 4 weist eine gleichseitige dreieckige Querschnittsform auf, wobei in dem Ausführungsbeispiel alle Innenwinkel 6 60° betragen und die Seiten 7 alle gleich lang sind. Im Zentrum der dreieckigen Öffnung 4 ist zum Vergleich mit den Querschnittsformen gängiger Öffnungen ein Inkreis 8 mit Radius 9 abgebildet. Der Radius 9 definiert dabei in Bezug auf eine kreisrunde Öffnung entsprechend dem Inkreis 8 eine freie Länge, über die das Kunststoffmaterial bzw. schäumbare Kunststoffpartikel in der Kavität 2 nicht abgestützt ist/sind und somit in die Öffnung eindrücken können. Das Eindrücken führt zu einer Abzeichnung der Öffnung 4 auf dem mit dem Werkzeug 1 herzustellenden Formkörper und ist somit üblicherweise nicht gewünscht. Mit anderen Worten wird in der Fig. 2 ein Vergleich der dreieckigen Öffnung 4 mit einer kreisrunden Öffnung mit dem Radius 9 dargestellt, deren Querschnittsform sonach kreisrund ist und die eine Querschnittsfläche aufweist, die dem Inkreis 8 der dreieckigen Querschnittsform entspricht.

Ersichtlich definiert dabei der Radius 9 sowohl für die dreieckige Querschnittsform der Öffnung 4 als auch für die kreisrunde Form gemäß dem Inkreis 8 die halbe Länge der nicht abgestützten Strecke, über welche ein Kunststoffpartikel nicht abgestützt ist. Mit anderen Worten, ein Kunststoffpartikel, der sich über dem Mittelpunkt des Inkreises 8 befindet, ist am wenigsten abgestützt und würde sich sonach am weitesten in die dem Inkreis 8 entsprechende Öffnung eindrücken. Fig. 2 kann ferner entnommen werden, dass die zu dem Inkreis 8 gehörende dreieckige Querschnittsform, die die Querschnittsform der dreieckigen Öffnung 4 bildet, eine größere Querschnittsfläche aufweist, als der Inkreis 8. Trotzdem weist die dreieckige Öffnung 4 keine größere freie Länge auf, d.h. Kunststoffpartikel, die oberhalb der dreieckigen Öffnung 4 angeordnet sind, sind mindestens genauso abgestützt, wie Kunststoffpartikel, die sich über der entsprechenden kreisrunden Öffnung, die dem Inkreis 8 entspricht, befinden.

Ersichtlich bildet dabei auch der Radius 9 die Länge aus, über die Kunststoffpartikel am wenigsten abgestützt sind. Alle weiteren Punkte innerhalb der dreieckigen Querschnittsform befinden sich näher an den Seiten 7 der dreieckigen Querschnittsform und sind somit besser abgestützt. Daraus ergibt sich, dass die dreieckige Querschnittsform der dreieckigen Öffnung 4 einen höheren Volumenstrom des Fluids bei gleicher Eindrückung bzw. Abzeichnung auf dem Formteil ermöglicht. Demnach kann bei gleicher Querschnittsfläche der dreieckigen Öffnung 4 im Vergleich zu einer entsprechenden kreisrunden Öffnung das Eindrücken des Formteils in die dreieckige Öffnung 4 reduziert werden oder bei gleichen Abstützeigenschaften kann der Volumenstrom vergrößert werden.

Des Weiteren bietet sich, insbesondere für den Fall, in dem Flächen durch ebene Dreiecke approximiert werden, wie z. B. für das STL-Format nötig, im Zusammenhang mit der rechnerbasierten Konzipierung des Werkzeugs 1 der Vorteil, dass die dreieckige Öffnung 4 eine gegenüber einer kreisrunden Öffnung deutlich geringere Datenmenge beansprucht bzw. eine solche erzeugt werden muss. Für die dreieckige Öffnung 4 werden lediglich drei Eckpunkte 10, 11, 12 gespeichert, wohingegen die kreisrunde Querschnittsform eine Vielzahl von Punkten für die Definition des Kreises benötigt oder üblicherweise, beispielsweise im STL-Format, durch eine Vielzahl von Dreiecken angenähert wird. Somit ist die dreieckige Öffnung 4 im Hinblick auf die benötigte bzw. zu erzeugende und zu verarbeitende Datenmenge erheblich effizienter.

Des Weiteren bietet die dreieckige Öffnung 4 Vorteile im Hinblick auf die Herstellbarkeit. Angenommen, die Fertigungsrichtung der dreieckigen Öffnung 4 bzw. des Bereichs 3 ist in Richtung des Pfeils 13, der in Fig. 2 dargestellt ist. Als Fertigungsrichtung wird dabei in einem additiven Prozess die Richtung verstanden, in der sukzessive schichtweise Schichten eines Baumaterials aufgetragen und verfestigt werden. Somit bietet die dreieckige Öffnung 4 den Vorteil, dass der Überhang durch die Innenwinkel 6 definiert ist und somit in diesem Beispiel ein Überhang von 60° gebaut werden muss. Dies ist mit vorliegenden additiven Fertigungsverfahren problemlos möglich. Die kreisrunde Form weist dagegen insbesondere in der oberen Hälfte der Kreisform eine nahezu waagrechte Fläche auf, deren additive Herstellung aufgrund des vollständigen Überhangs problematisch sein könnte. Selbstverständlich sind die Seitenlängen der Seiten 7 sowie die Innenwinkel 6 der dreieckigen Querschnittsform der dreieckigen Öffnung 4 beliebig wählbar und nur in dem gezeigten Ausführungsbeispiel auf die angegeben Werte festgelegt.

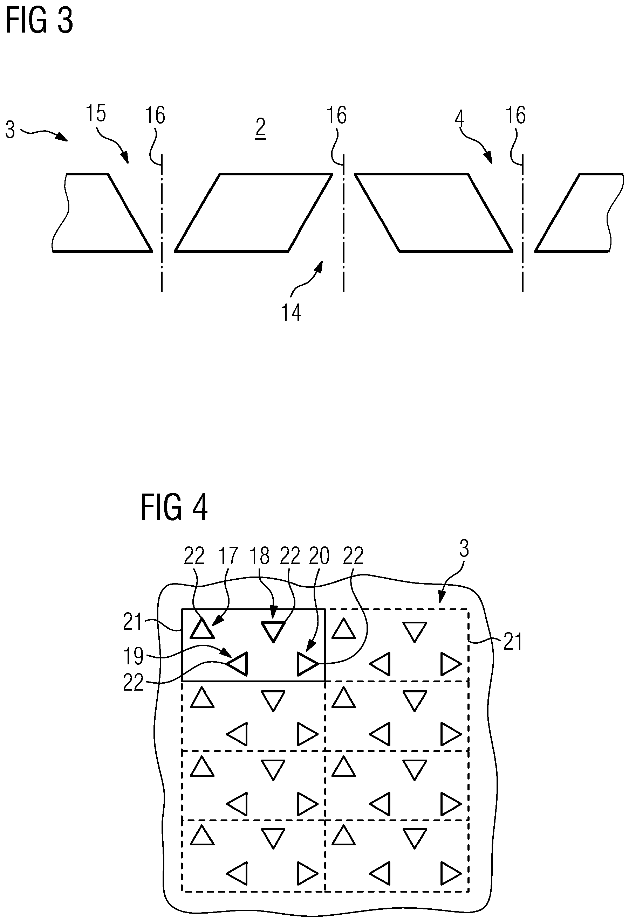

Fig. 3 zeigt einen weiteren beispielhaften Bereich 3, der dreieckige Öffnungen 4, 14, 15 aufweist. Die dreieckigen Öffnungen 4, 14, 15 weisen Mittelachsen 16 auf, die im Wesentlichen parallel zu der Fluidströmung ausgerichtet sind. Beispielsweise stehen die Mittelachsen 16 senkrecht auf den Querschnittsflächen der dreieckigen Öffnungen 4, 14, 15. Ersichtlich ist die dreieckige Öffnung 4 in Form eines dreieckigen Prismas ausgebildet, d.h. dass die Querschnittsfläche entlang der Mittelachse 16 konstant bleibt.

Die dreieckige Öffnung 14 hingegen ist in Form eines Pyramidenstumpfes ausgebildet, wobei in Strömungsrichtung des Fluids in die Kavität hinein eine, beispielsweise kontinuierliche, Verringerung der Querschnittsfläche vorliegt. Die dreieckige Öffnung 14 bietet somit den Vorteil, dass ein Druckabfall an der dreieckigen Öffnung 14 reduziert ist, da sich die Querschnittsfläche kontinuierlich in Richtung der Kavität 2 verringert.

Die dreieckige Öffnung 15 ist ebenfalls als Pyramidenstumpf ausgebildet, wobei sich der Querschnitt der dreieckigen Öffnung 15 in Richtung der Kavität 2, beispielsweise konstant (kontinuierlich), vergrößert. Die dreieckige Öffnung 15 bietet somit den Vorteil, dass ein in der Kavität 2 hergestelltes Formteil leichter von dem Bereich 3 entformt werden kann. Selbstverständlich sind die Größen sowie die Orientierungen der einzelnen dreieckigen Öffnungen 4, 14, 15 sowie deren Anzahl und deren Anordnung grundsätzlich beliebig wählbar. Insbesondere können mehrere dreieckige Öffnungen 4, 14, 15 beliebig miteinander auf demselben Bereich 3 kombiniert werden.

Fig. 4 zeigt einen weiteren beispielhaften Bereich 3, der eine Vielzahl von dreieckigen Öffnungen 17 - 20 aufweist. Jede der dreieckigen Öffnungen 17 - 20 kann beispielsweise gemäß den zuvor beschriebenen dreieckigen Öffnungen 4, 14, 15 oder aus Kombinationen daraus hergestellt sein. Die dreieckigen Öffnungen 17 - 20 bilden eine Einheitszelle 21, wobei die dreieckigen Öffnungen 17 - 20 jeweils um 90° gegeneinander verdreht vorliegen. So ist die dreieckige Öffnung 20 um 90° im Uhrzeigersinn gegen die dreieckige Öffnung 17 verdreht. Die dreieckige Öffnung 17 wiederum ist um 90° im Uhrzeigersinn gegenüber der dreieckigen Öffnungen 19 verdreht, welche wiederum um 90° im Uhrzeigersinn gegenüber der dreieckigen Öffnung 18 verdreht ist. Somit weist in der gezeigten Ebene eine Ecke 22 jeweils einer der dreieckigen Öffnungen 17 - 20 nach oben (dreieckige Öffnung 17), nach unten (dreieckige Öffnung 18), nach links (dreieckige Öffnung 19) und nach rechts (dreieckige Öffnung 20).

Vorteilhafterweise kann zur Verteilung der dreieckigen Öffnungen 17 - 20 die Einheitszelle 21 über den Bereich 3 verteilt werden. Dabei kann die Einheitszelle 21 über den Bereich 3 gerastert werden, sodass sich ein Muster aus, insbesondere nahtlos, aneinander angrenzenden Einheitszellen 21 bildet. Dadurch wird gewährleistet, dass unabhängig von der Geometrie des Bereichs 3 bzw. des Werkzeugs 1, dem der Bereich 3 zugeordnet ist, stets wenigstens eine der dreieckigen Öffnungen 17 - 20 eine bevorzugte bzw. eine zumindest definiert herstellbare Orientierung aufweist.

Zur Herstellung des Bereichs 3, der ebenfalls als Einlegebauteil für das Werkzeug 1 ausgebildet sein kann, wird ein Einheitsvolumen definiert, das, insbesondere gleichmäßig, mit Einheitszellen 21 ausgefüllt wird. Anschließend wird das Einheitsvolumen über den Bereich 3 gelegt und die Schnittmenge aus dem Bereich 3 und dem Einheitsvolumen gebildet. Die entsprechende Schnittmenge legt sonach die Anordnung der einzelnen dreieckigen Öffnungen 17 - 20 in dem Bereich 3 fest.

Der Bereich 3 bzw. das Werkzeug 1 können mit dem erfindungsgemäßen Verfahren hergestellt werden. Das erfindungsgemäße Herstellungsverfahren für Formteile aus schäumbaren Kunststoffpartikeln kann selbstverständlich mittels des Werkzeugs 1 bzw. eines den Bereich 3 aufweisenden Werkzeugs 1 durchgeführt werden.

### BEZUGSZEICHENLISTE

1 Werkzeug
2 Kavität
3 Bereich
4 dreieckige Öffnung
5 Pfeil
6 Innenwinkel
7 Seite
8 Inkreis
9 Radius
10 Ecke
11 Ecke
12 Ecke
13 Pfeil
14 dreieckige Öffnung
15 dreieckige Öffnung
16 Mittelachse
17 dreieckige Öffnung
18 dreieckige Öffnung
19 dreieckige Öffnung
20 dreieckige Öffnung
21 Einheitszelle
22 Ecke

## Patentansprüche

1. Werkzeug (1), insbesondere Schäumwerkzeug zur Verarbeitung schäumbarer Kunststoffpartikel, mit wenigstens einem wenigstens einen Abschnitt einer Kavität (2) ausbildenden Bereich (3), der wenigstens eine Öffnung (4, 14, 15, 17 - 20) aufweist, durch die wenigstens ein Fluid, insbesondere zum Schäumen der Kunststoffpartikel, in die Kavität (2) und/oder aus der Kavität (2) heraus leitbar ist, wobei die Öffnung (4, 14, 15, 17 - 20) eine dreieckige Querschnittsform aufweist, **dadurch gekennzeichnet, dass**
wenigstens zwei dreieckige Öffnungen (4, 14, 15, 17 - 20) unterschiedlich groß ausgebildet sind, und/oder
wenigstens zwei dreieckige Öffnungen (4, 14, 15, 17 - 20) unterschiedlich orientiert sind.

2. Werkzeug nach Anspruch 1, **dadurch gekennzeichnet, dass** wenigstens ein Innenwinkel (6) der dreieckigen Querschnittsform einen Wert in einem Bereich zwischen 30° - 80°, bevorzugt größer als 45°, aufweist, wobei die Summe der Innenwinkel (6) 180° beträgt.

3. Werkzeug nach Anspruch 1 oder 2, **dadurch gekennzeichnet, dass** die dreieckige Querschnittsform gleichseitig ist.

4. Werkzeug nach einem der vorangehenden Ansprüche, **dadurch gekennzeichnet, dass** die Querschnittsfläche und/oder die Querschnittsform der wenigstens einen dreieckigen Öffnung (4, 14, 15, 17 - 20) entlang einer, insbesondere parallel zu einer Strömungsrichtung des Fluids verlaufenden, Mittelachse (16) veränderlich ist.

5. Werkzeug nach Anspruch 4, **dadurch gekennzeichnet, dass** eine Querschnittsfläche der wenigstens einen dreieckigen Öffnung (4, 14, 15, 17 - 20) entlang einer Mittelachse (16), insbesondere kontinuierlich, zunimmt oder abnimmt und/oder die dreieckige Öffnung (4, 14, 15, 17 - 20) pyramidal ausgebildet ist.

6. Werkzeug nach einem der vorangehenden Ansprüche, **dadurch gekennzeichnet, dass** das Werkzeug (1) mit wenigstens einer Strömungserzeugungseinrichtung derart koppelbar ist, dass ein Überdruck und/oder ein Unterdruck an der wenigstens einen dreieckigen Öffnung (4, 14, 15, 17 - 20) erzeugbar ist.

7. Werkzeug nach einem der vorangehenden Ansprüche, **dadurch gekennzeichnet, dass** wenigstens zwei, insbesondere vier, dreieckige Öffnungen (4, 14, 15, 17 - 20) eine Einheitszelle (21) bilden, wobei die wenigstens zwei dreieckigen Öffnungen (4, 14, 15, 17 - 20) unterschiedlich orientiert sind.

8. Werkzeug nach Anspruch 7, **dadurch gekennzeichnet, dass** die Einheitszelle (21) vier dreieckige Öffnungen (4, 14, 15, 17 - 20) aufweist, wobei die dreieckigen Öffnungen (4, 14, 15, 17 - 20) jeweils um 90° gegeneinander gedreht sind.

9. Werkzeug nach einem der vorangehenden Ansprüche, **dadurch gekennzeichnet, dass** der wenigstens eine Bereich (3) mittels eines additiven Herstellungsverfahrens, insbesondere mittels Laserstrahlschmelzens und/oder Binder Jettings und/oder Elektronenstrahlschmelzens und/oder Fused Deposition Modeling und/oder Laser Metal Deposition, hergestellt ist.

10. Werkzeug nach einem der vorangehenden Ansprüche, **dadurch gekennzeichnet, dass** der den wenigstens einen Abschnitt der Kavität (2) ausbildende Bereich (3), der wenigstens eine dreieckige Öffnung (4, 14, 15, 17 - 20) aufweist, als Einlegebauteil ausgebildet ist, das in eine korrespondierende Aufnahme des Werkzeugs (1) einlegbar ist.

11. Werkzeug nach einem der vorangehenden Ansprüche, **dadurch gekennzeichnet, dass** der wenigstens eine Bereich (3) mittels CAD-Daten oder mittels wenigstens eines Maschinenparameters erzeugbar ist.

12. Einlegebauteil für ein Werkzeug (1), insbesondere ein Werkzeug (1) nach einem der vorangehenden Ansprüche, **dadurch gekennzeichnet, dass** das Einlegebauteil wenigstens einen wenigstens einen Abschnitt einer Kavität (2) ausbildenden Bereich (3) aufweist oder ausbildet, der wenigstens eine Öffnung (4, 14, 15, 17 - 20) aufweist, durch die wenigstens ein Fluid, insbesondere zum Schäumen der Kunststoffpartikel, in die Kavität (2) und/oder aus der Kavität (2) heraus leitbar ist, wobei die Öffnung (4, 14, 15, 17 - 20) eine dreieckige Querschnittsform aufweist **dadurch gekennzeichnet, dass**
wenigstens zwei dreieckige Öffnungen (4, 14, 15, 17 - 20) unterschiedlich groß ausgebildet sind, und/oder
wenigstens zwei dreieckige Öffnungen (4, 14, 15, 17 - 20) unterschiedlich orientiert sind.

13. Verfahren zur Herstellung eines Werkzeugs (1), insbesondere eines Werkzeugs nach einem der Ansprüche 1 bis 11 oder eines Einlegebauteils nach Anspruch 12, mit wenigstens einem wenigstens einen Abschnitt einer Kavität (2) ausbildenden Bereich (3), der wenigstens eine Öffnung (4, 14, 15, 17 - 20) aufweist, durch die wenigstens ein Fluid in die Kavität (2) oder aus der Kavität (2) heraus leitbar ist, wobei die wenigstens eine Öffnung (4, 14, 15, 17 - 20) mit einer dreieckigen Querschnittsform hergestellt wird, **dadurch gekennzeichnet, dass**
wenigstens zwei dreieckige Öffnungen (4, 14, 15, 17 - 20) unterschiedlich groß ausgebildet werden, und/oder
wenigstens zwei dreieckige Öffnungen (4, 14, 15, 17 - 20) unterschiedlich orientiert werden, wobei das Werkzeug mittels eines additiven Herstellungsverfahrens hergestellt wird.

14. Verfahren nach Anspruch 13, **dadurch gekennzeichnet, dass** wenigstens zwei, insbesondere vier, dreieckige Öffnungen (4, 14, 15, 17 - 20) eine Einheitszelle (21) bilden, wobei die wenigstens zwei dreieckigen Öffnungen (4, 14, 15, 17 - 20) unterschiedlich orientiert sind. wobei insbesondere die wenigstens zwei dreieckigen Öffnungen (4, 14, 15, 17 - 20) durch, insbesondere zumindest teilweise automatisiertem, Positionieren von wenigstens zwei Einheitszellen (21) über das herzustellende Werkzeug (1) verteilt werden.

15. Verfahren zur Herstellung eines geschäumten Formteils mittels eines Werkzeugs (1) nach einem der Ansprüche 1 bis 11.

## Claims

1. Tool (1), in particular a foaming tool for processing foamable plastic particles, having at least one region (3) that forms at least one section of a cavity (2) and has at least one opening (4, 14, 15, 17-20) through which at least one fluid, in particular for foaming the plastic particles, can be passed into the cavity (2) and/or out of the cavity (2), wherein the opening (4, 14, 15, 17-20) has a triangular cross-sectional shape,
**characterised in that**
at least two triangular openings (4, 14, 15, 17-20) are of different sizes,
and/or
at least two triangular openings (4, 14, 15, 17-20) are oriented differently.

2. Tool according to claim 1, **characterised in that** at least one interior angle (6) of the triangular cross-sectional shape has a value in a range between 30°-80°, preferably greater than 45°, wherein the sum of the interior angles (6) is 180°.

3. Tool according to claim 1 or 2, **characterised in that** the triangular cross-sectional shape is equilateral.

4. Tool according to any one of the preceding claims, **characterised in that** the cross-sectional area and/or the cross-sectional shape of the at least one triangular opening (4, 14, 15, 17-20) is variable along a central axis (16) running, in particular parallel, to a direction of flow of the fluid.

5. Tool according to claim 4, **characterised in that** a cross-sectional area of the at least one triangular opening (4, 14, 15, 17-20) increases or decreases along a central axis (16), in particular continuously, and/or the triangular opening (4, 14, 15, 17-20) is pyramidal.

6. Tool according to any one of the preceding claims,
**characterised in that**
the tool (1) can be coupled to at least one flow-generating device in such a way that a positive pressure and/or a negative pressure can be generated at the at least one triangular opening (4, 14, 15, 17-20).

7. Tool according to any one of the preceding claims, **characterised in that** at least two, in particular four, triangular openings (4, 14, 15, 17-20) form a unit cell (21), wherein the at least two triangular openings (4, 14, 15, 17-20) are oriented differently.

8. Tool according to claim 7, **characterised in that** the unit cell (21) has four triangular openings (4, 14, 15, 17-20), wherein the triangular openings (4, 14, 15, 17-20) are each rotated 90° with respect to one another.

9. Tool according to any one of the preceding claims, **characterised in that** the at least one region (3) is produced by means of an additive production process, in particular by means of laser beam melting and/or binder jetting and/or electron beam melting and/or fused deposition modelling and/or laser metal deposition.

10. Tool according to any one of the preceding claims, **characterised in that** the region (3) that forms the at least one section of the cavity (2) and has at least one triangular opening (4, 14, 15, 17-20) is designed as an insert component that can be inserted into a corresponding receptacle of the tool (1).

11. Tool according to any one of the preceding claims, **characterised in that** the at least one region (3) can be generated by means of CAD data or by means of at least one machine parameter.

12. Insert component for a tool (1), in particular a tool (1) according to any one of the preceding claims, **characterised in that** the insert component has or forms at least one region (3) that forms at least one section of a cavity (2) and has at least one opening (4, 14, 15, 17-20) through which at least one fluid, in particular for foaming the plastic particles, can be passed into the cavity (2) and/or out of the cavity (2),wherein the opening (4, 14, 15, 17-20) has a triangular cross-sectional shape,
**characterised in that**
at least two triangular openings (4, 14, 15, 17-20) are of different sizes,
and/or
at least two triangular openings (4, 14, 15, 17-20) are oriented differently.

13. Method for producing a tool (1), in particular a tool according to any one of claims 1 to 11, or an insert component according to claim 12, having at least one region (3) that forms at least one section of a cavity (2), which has at least one opening (4, 14, 15, 17-20) through which at least one fluid can be passed into the cavity (2) or out of the cavity (2), wherein the at least one opening (4, 14, 15, 17-20) is produced with a triangular cross-sectional shape, **characterised in that** at least two triangular openings (4, 14, 15, 17-20) are of different sizes, and/or
at least two triangular openings (4, 14, 15, 17-20) are oriented differently, wherein the tool is produced by means of an additive production process.

14. Method according to claim 13, **characterised in that** at least two, in particular four, triangular openings (4, 14, 15, 17-20) form a unit cell (21), wherein the at least two triangular openings (4, 14, 15, 17-20) are oriented differently, wherein in particular the at least two triangular openings (4, 14, 15, 17-20) are distributed over the tool (1) to be produced by, in particular at least partially automated, positioning of at least two unit cells (21).

15. Method for producing a foamed moulded part by means of a tool (1) according to any one of claims 1 to 11.

## Revendications

1. Moule (1), en particulier moule de moussage pour le traitement de particules de matière plastique expansibles, avec au moins une zone (3) réalisant au moins une section d'une cavité (2), qui présente au moins une ouverture (4, 14, 15, 17 - 20), par laquelle au moins un fluide, en particulier pour le moussage des particules de matière plastique, peut être acheminé dans la cavité (2) et/ou hors de la cavité (2), dans lequel l'orifice (4, 14, 15, 17 - 20) présente une forme de section transversale triangulaire,
**caractérisé en ce que**
au moins deux orifices (4, 14, 15, 17 - 20) triangulaires sont réalisés avec une taille différente, et/ou
au moins deux orifices (4, 14, 15, 17 - 20) triangulaires sont orientés différemment.

2. Moule selon la revendication 1, **caractérisé en ce qu'**au moins un angle intérieur (6) de la forme de section transversale triangulaire présente une valeur dans une plage entre 30° - 80°, de manière préférée supérieure à 45°, dans lequel la somme des angles intérieurs (6) est égale à 180°.

3. Moule selon la revendication 1 ou 2, **caractérisé en ce que** la forme de section transversale triangulaire est équilatérale.

4. Moule selon l'une quelconque des revendications précédentes, **caractérisé en ce que** la surface de section transversale et/ou la forme de section transversale de l'au moins un orifice (4, 14, 15, 17 - 20) triangulaire varient le long d'un axe central (16) s'étendant en particulier de manière parallèle par rapport à une direction d'écoulement du fluide.

5. Moule selon la revendication 4, **caractérisé en ce qu'**une surface de section transversale de l'au moins un orifice (4, 14, 15, 17 - 20) triangulaire augmente ou diminue, en particulier en continu, le long d'un axe central (16) et/ou l'orifice (4, 14, 15, 17 - 20) triangulaire est réalisé de manière pyramidale.

6. Moule selon l'une quelconque des revendications précédentes, **caractérisé en ce que** le moule (1) peut être couplé à au moins un dispositif de production d'écoulement de telle manière qu'une surpression et/ou une dépression peuvent être produites sur l'au moins un orifice (4, 14, 15, 17 - 20) triangulaire.

7. Moule selon l'une quelconque des revendications précédentes, **caractérisé en ce qu'**au moins deux, en particulier quatre, orifices (4, 14, 15, 17 - 20) triangulaires forment une cellule unitaire (21), dans lequel les au moins deux orifices (4, 14, 15, 17 - 20) triangulaires sont orientés différemment.

8. Moule selon la revendication 7, **caractérisé en ce que** la cellule unitaire (21) présente quatre orifices (4, 14, 15, 17 - 20) triangulaires, dans lequel les orifices (4, 14, 15, 17 - 20) triangulaires sont tournés les uns à l'encontre des autres respectivement de 90°.

9. Moule selon l'une quelconque des revendications précédentes, **caractérisé en ce que** l'au moins une zone (3) est fabriquée au moyen d'un procédé de fabrication additive, en particulier par fusion laser et/ou projection de liant et/ou fusion par bombardement électronique et/ou par FDM [Fused déposition modeling - dépôt de fil fondu] et/ou par dépôt métallique par laser.

10. Moule selon l'une quelconque des revendications précédentes, **caractérisé en ce que** la zone (3) réalisant l'au moins une section de la cavité (2), qui présente au moins un orifice (4, 14, 15, 17 - 20) triangulaire, est réalisée en tant que composant d'insertion, qui peut être inséré dans un logement correspondant du moule (1).

11. Moule selon l'une quelconque des revendications précédentes, **caractérisé en ce que** l'au moins une zone (3) peut être produite au moyen de données CAD ou au moyen d'au moins un paramètre de machine.

12. Composant d'insertion pour un moule (1), en particulier un moule (1) selon l'une quelconque des revendications précédentes, **caractérisé en ce que** le composant d'insertion présente ou réalise au moins une zone (3) réalisant au moins une section d'une cavité (2), qui présente au moins un orifice (4, 14, 15, 17 - 20), par lequel au moins un fluide, en particulier pour le moussage de particules de matière plastique, peut être acheminé dans la cavité (2) et/ou hors de la cavité (2), dans lequel l'orifice (4, 14, 15, 17 - 20) présente une forme de section transversale triangulaire,
**caractérisé en ce que**
au moins deux orifices (4, 14, 15, 17 - 20) triangulaires sont réalisés avec des tailles différentes, et/ou
au moins deux orifices (4, 14, 15, 17 - 20) triangulaires sont orientés différemment.

13. Procédé de fabrication d'un moule (1), en particulier d'un moule selon l'une quelconque des revendications 1 à 11 ou d'un composant d'insertion selon la revendication 12, avec au moins une zone (3) réalisant au moins une section d'une cavité (2), qui présente au moins un orifice (4, 14, 15, 17 - 20), par lequel au moins un fluide peut être acheminé dans la cavité (2) ou hors de la cavité (2), dans lequel l'au moins un orifice (4, 14, 15, 17 - 20) est fabriqué avec une forme de section transversale triangulaire, **caractérisé en ce qu'**au moins deux orifices (4, 14, 15, 17 - 20) triangulaires sont réalisés avec des tailles différentes, et/ou
au moins deux orifices (4, 14, 15, 17 - 20) triangulaires sont orientés différemment, dans lequel le moule est fabriqué au moyen d'un procédé de fabrication additive.

14. Procédé selon la revendication 13, **caractérisé en ce qu'**au moins deux, en particulier quatre, orifices (4, 14, 15 17 - 20) triangulaires forment une cellule unitaire (21), dans lequel les au moins deux orifices (4, 14, 15 17 - 20) triangulaires sont orientés différemment, dans lequel en particulier les au moins deux orifices (4, 14, 15, 17 - 20) triangulaires sont répartis par positionnement, en particulier au moins en partie automatisé, d'au moins deux cellules unitaires (21) sur le moule (1) à fabriquer.

15. Procédé de fabrication d'une pièce moulée moussée au moyen d'un moule (1) selon l'une quelconque des revendications 1 à 11.
